# EUROPEAN PATENT APPLICATION

(11) **EP 0 807 374 A1**
(43) Date of publication of application: **19.11.1997**
(21) Application number: 97201417.9
(22) Date of filing: 14.05.1997
(51) Int. Cl.: A01D 34/73

(54) **Apparatus for working agricultural crop**

(30) Priority: 14.05.1996 NL 1003113
(71) Applicant: Greenland Nieuw-Vennep B.V., 2153 LR Nieuw-Vennep (NL)
(72) Inventor: Vissers, Hermanus, Hendrik, 2451 ZS Leimuiden (NL); Heemskerk, Johannes, Wilhelmus, Cornelis, 2154 MK Burgerveen (NL)
(74) Representative: de Vries, Johannes Hendrik Fokke

(57) **Abstract**

An apparatus for working agricultural crop, such as a mower, the apparatus comprising a frame movable over the field, rotatably driven working elements mounted on the frame, such as mowing discs (5), each of said elements having a plurality of coupling means at its circumference, said means comprising an upright pin (11) extending through a hole in the element, a strip-like cutting blade (10) being rotatably mounted on said pin, wherein said element comprises a plate-like support (13) at a distance thereof, said support having a hole aligned with said pin hole in such a manner that the upright pin extends through both holes, wherein said pin is provided with locking means at at least one side of the cutting blade strip, so that the pin is completely protected and can be easily dismounted.

## Description

The invention relates to an apparatus for working agricultural crop, such as a mower, said apparatus comprising a frame movable over the field, rotatably driven working elements mounted on the frame, such as mowing discs, each of said elements having a plurality of coupling means at its circumference, said means comprising an upright pin extending through a hole in the element, a strip-like cutting blade being rotatably mounted on said pin.

The above-mentioned strip-like cutting blades are subject to a rather high wear and sometimes a significant damage due to striking against stones or other obstacles in the field. Therefore such cutting blade strips should be coupled to the rotatably driven working elements in such a manner that they can be easily replaced. The disadvantage of the existing systems is that replacement requires relatively much work because generally the pin on which the cutting blade is borne, is either damaged or stuck due to the detremental effect of the saps of the agricultural crop.

The invention aims to obviate the above-mentioned disadvantages and to this end provides an apparatus characterized in that said element comprises a plate-like support at a distance thereof, said support having a hole aligned with said pin hole in such a manner that the upright pin extends through both holes, wherein said pin is provided with locking means at at least one side of the cutting blade strip.

Thanks to the double bearing of the pin, between which bearings the cutting blade strip is rotatably mounted, the pin can be fully protected at upper and lower sides by the material of the working element. Moreover, the one-sided use of the locking means provides for an efficient protection against the above-mentioned corrosive fluids.

In a preferred embodiment the locking means are formed by a spring ring holding the pin only in one of the holes.

In this case it is advantageous to provide a seal at both sides of this locking ring to guarantee an effective protection.

The invention further relates to a tool for dismounting a cutting blade strip rotatable around a mounting pin on the rotor mounted in the frame of a mower, the tool of the invention being characterized by a peg and a lever for moving said peg with respect to the frame and adapted to support on the frame.

By means of this relatively simple tool the pin can simply be lifted out of the holes by an axial pressure force so that the cutting blade can be replaced easily.

The above-mentioned and further features of the invention will be further explained in the following description of an embodiment. In the drawings shows:
Fig. 1 a perspective view of an agricultural machine made as a mower, comprising working elements with cutting blade strips,
Fig. 2 an upright section through one of the working elements with the coupling means according to the invention,
Fig. 3 a section corresponding with Fig. 2 of the coupling means according to a different embodiment,
Fig. 4 an upright section of the coupling means according to a third variant,
Fig. 5 an upright section corresponding with Fig. 2, wherein a tool according to the invention can be mounted for removing the pin,
Fig. 6 a section corresponding with Fig. 5 of a variant of the dismounting tool.

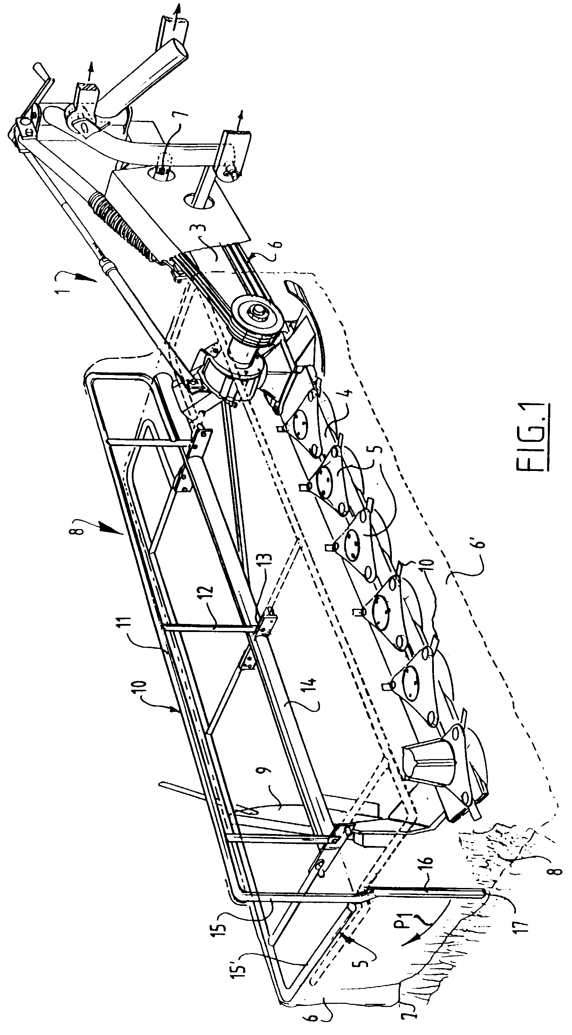

In Fig. 1 the frame is indicated by reference numeral 1 and is mainly made of a headstock 2 to be hitched to an agricultural tractor not shown. The frame further comprises a transverse housing 3 attached to the headstock 2 and serving for coupling a cutter bar 4 comprising a plurality of rotating working elements 5. In the embodiment shown six working elements are indicated, which can be rotated by a driving system included in the cutter bar 4 through the belt drive 6 and the power take-off 7.

A cover 8 not further described is provided above the cutter bar with the cutter means as protection from the mowing operation.

Each of the working elements 5 is provided with three strip-like cutting blades 10 rotatably borne around an upright pin.

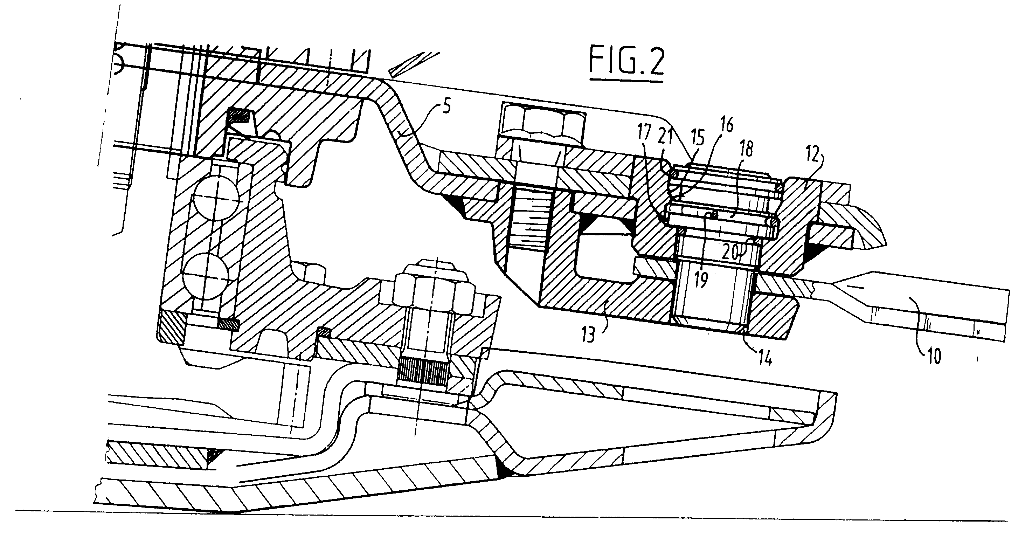

Reference is now made to the embodiment of Fig. 2, wherein corresponding parts are indicated by the same reference numerals. The working element is a formed plate with a mainly triangular outer appearance, wherein at each corner an upright pin 11 perpendicular to the plane of the disc 5 is provided, the cutting strip 10 being rotatably borne around said pin. For this purpose a replacable wear element 12 is provided in the upper face of the disc, said wear element 12 having a through hole. At the lower side of the plate 5 a plate-shaped support 13 is fixed by welding and is also provided with a through hole 14 aligned with the hole of the wear element 12. In this manner it is possible to push the pin 11 both in the hole of the wear element 12 and in the hole of the support 13. As the support 13 lies at some distance from the wear element 12, the strip-like cutting blade 10 can also be aligned with both said holes with a corresponding hole, whereafter the pin 11 can be fixed by pressing the same downwardly.

Fixing takes place in that the upper end of the through hole in the wear element 12 is widened with a profile hole 15. The profile hole has an inwardly directed shoulder 16 so that an undercut chamber 17 is formed. The pin 11 is further provided with a groove 18 in which a spring ring 19 can be placed. The spring ring is wider than the groove 18 and can be fully received in the groove 18 by compression. If the pin 11 is pressed downwardly, the spring 19 will be compressed and will widen after passing the shoulder 16, whereby the pin 11 is locked.

At both sides of the spring ring 19 sealing rings 20, 21 are received in corresponding grooves in the pin 11. These sealing rings 20 can be made of a suitable material, for example rubber, and serve for sealing the play between the pin and the wall of the hole of the wear piece 12. In this manner the spring ring 19 will be protected against effects from outside.

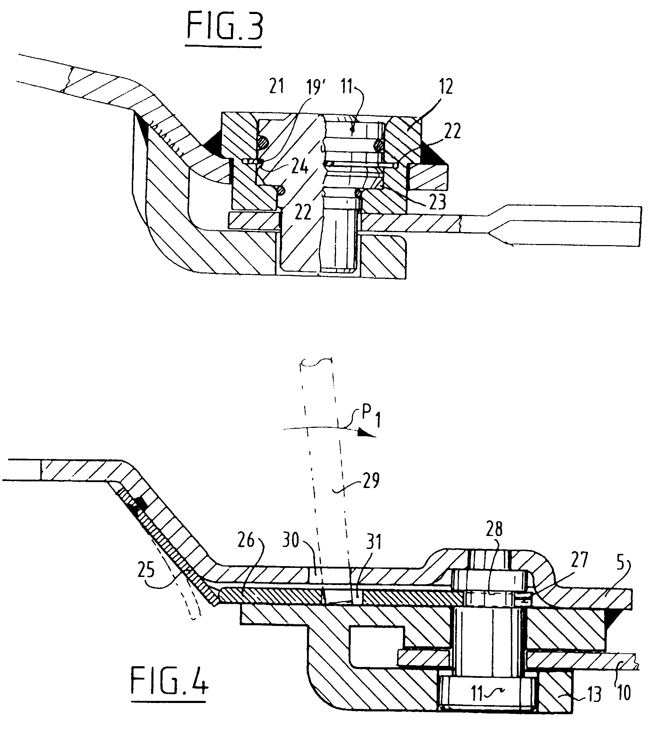

Fig. 3 shows an embodiment wherein the pin 11 is substantially the same as the embodiment of Fig. 2, wherein however, the spring ring 19' is received in a groove 22 of the wear element 12. The wide part of the pin 11 has a locating edge 23 which provides for an outward pressing of the spring ring 19' during the insertion of the pin 11 in the hole. As soon as the locating face 23 has passed the spring ring 19', said ring will spring back in a groove 24 in the head of the pin 11. Also in this case sealing rings 20 and 21 are provided to protect the spring ring 19.

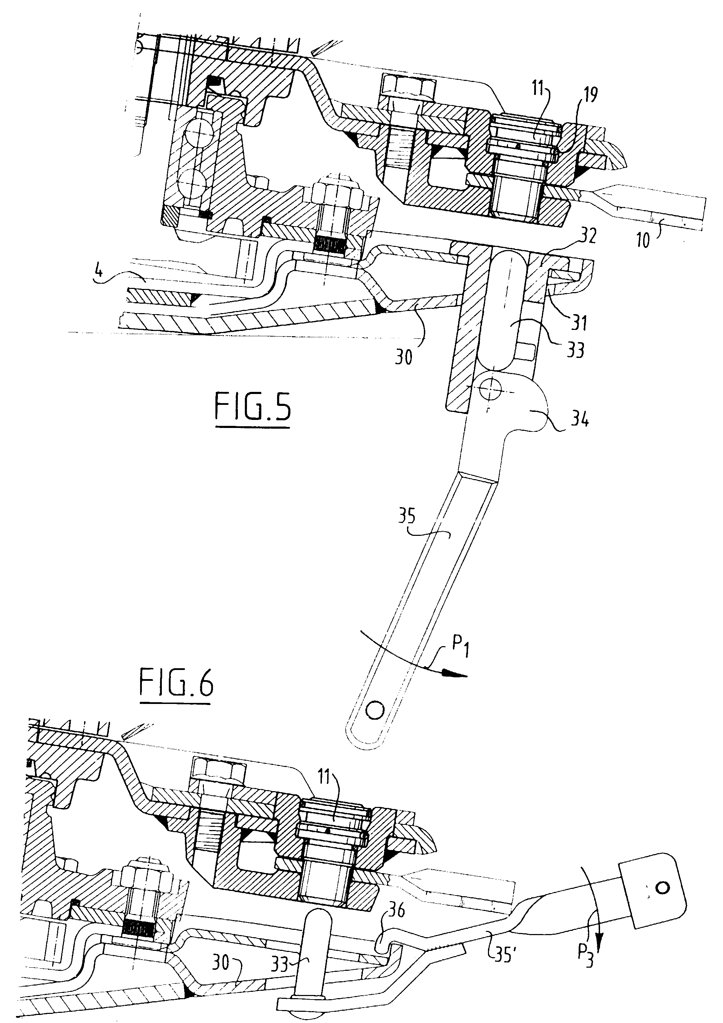

Fig. 4 shows an embodiment wherein the pin is inserted into the aligned holes of the plate of the working element 5 and the support 13 from the lower side instead of from the upper side. The support 13 has in this case a U-shaped form in cross-section in such a manner that the strip-like cutting blade can be inserted between the legs of the U, wherein when the hole of the cutting blade is aligned, the pin 11 can be pushed upwardly.

A bolt 26 biased by a spring 25 can be received in a groove 28 of the pin 11 with a fork-shaped end 27. In this manner the pin 11 is locked in the mounted position.

For dismounting a dismounting pin 29 is used, which can be put through two auxiliary holes 30 in the rotating support 5 and 31 in the bolt 26 and by pivoting in the direction of the arrow P1 the bolt 26 can be moved to the left, whereby the fork 27 is removed out of the groove 28 of the pin 11 which can be removed thereafter.

Fig. 5 shows the possibility to easily dismount the pin 11. To this end a shoe 30 mounted at the lower side of the cutter bar 4 is provided with an opening 31, through which a bush-like sleeve 32 can be provided in such a manner that the widened head thereof rests on the shoe 30. The sleeve serves for guiding a peg 33 which can be moved upwardly in the opening of the sleeve 32 by means of an eccentric 34 by moving the eccentric 34 with the lever 35 in the direction of the arrow P2. The peg 33 abuts with the upper end against the lower end of the pin 11 in the working element, whereby due to the lever operation a relatively high axial force can be exerted on the lower side of the pin 11. This axial force is sufficient to overcome the resistance caused by compression of the spring ring 19, whereby thereafter the pin 11 can be removed easily and the cutting strip 10 can be replaced.

Fig. 6 shows an embodiment wherein the tool of Fig. 5 is replaced by a lever 35' having a hook-shaped end 36 which can engage the edge of the shoe 30. The lever 35 is provided with a peg 33 attached to the same. By rotating the lever in the direction of the arrow P3 the peg 30 is pressed upwardly against the lower side of the pin 11, whereby the same can also be removed in the above-described manner.

The invention is not restricted to the above-described embodiments.

## Claims

1. Apparatus for working agricultural crop, such as a mower, said apparatus comprising a frame movable over the field, rotatably driven working elements mounted on the frame, such as mowing discs, each of said elements having a plurality of coupling means at its circumference, said means comprising an upright pin extending through a hole in the element, a strip-like cutting blade being rotatably mounted on said pin, **characterized in that** said element comprises a plate-like support at a distance thereof, said support having a hole aligned with said pin hole in such a manner that the upright pin extends through both holes, wherein said pin is provided with locking means at at least one side of the cutting blade strip.

2. Apparatus according to claim 1, characterized in that the locking means are formed by a spring ring and a chamber receiving said spring ring on the one side and an undercut in the pin on the other side.

3. Apparatus according to claim 1 or 2, characterized in that a seal is provided around the pin at both sides of the locking means.

4. Apparatus according to claim 1, characterized in that the locking means are formed by a bolt slidable along a face of the element and engaging in an undercut of the pin.

5. Apparatus according to anyone of the preceding claims, characterized in that the support is an L-shaped bracket attached with the short leg to a side of the element, wherein the long leg is directed radially outwardly.

6. Apparatus according to anyone of the preceding claims, characterized in that the centre line of the pin extends parallel to the rotation axis and the cutting blade strip is twisted at a distance from the pin.

7. Tool for dismounting a cutting blade strip rotatably around a mounting pin on the rotor mounted in the frame of a mower, **characterized by** a peg and lever for moving said peg with respect to the frame and adapted to support on the frame.

8. Tool according to claim 7, characterized in that the peg and the lever are a unit, wherein the lever is provided with a hook-shaped support at a distance from the peg.

9. Tool according to claim 7, characterized in that the peg is slidably mounted in a bush, in which an eccentric is borne, said eccentric being connected to the lever and engaging the peg.
